(19) Europäisches Patentamt / European Patent Office / Office européen des brevets

(11) **EP 4 423 827 B1**

(12) **EUROPEAN PATENT SPECIFICATION**

(45) Date of publication and mention of the grant of the patent:
**03.12.2025 Bulletin 2025/49**

(21) Application number: **22800617.7**

(22) Date of filing: **04.10.2022**

(51) International Patent Classification (IPC):
*H01M 8/04014* (2016.01)   *H01M 8/04029* (2016.01)
*H01M 8/04111* (2016.01)   *H01M 8/04007* (2016.01)
*H01M 8/04089* (2016.01)

(52) Cooperative Patent Classification (CPC):
**H01M 8/04111; H01M 8/04022; H01M 8/04029;**
**H01M 8/04059; H01M 8/04097;** H01M 2008/1095;
H01M 2250/20; H01M 2250/402; Y02E 60/50;
Y02T 90/40

(86) International application number:
**PCT/EP2022/077523**

(87) International publication number:
**WO 2023/072532 (04.05.2023 Gazette 2023/18)**

(54) **FUEL CELL SYSTEM**

BRENNSTOFFZELLENSYSTEM

SYSTÈME DE PILE À COMBUSTIBLE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **28.10.2021 GB 202115488**

(43) Date of publication of application:
**04.09.2024 Bulletin 2024/36**

(73) Proprietor: **Rolls-Royce plc**
**London N1 9FX (GB)**

(72) Inventors:
• **PALMER, Chloe**
  **Derby, Derbyshire DE24 8BJ (GB)**
• **TACCONI, Jacopo**
  **Derby, Derbyshire DE24 8BJ (GB)**

(74) Representative: **Rolls-Royce plc**
**Moor Lane (ML-9)**
**PO Box 31**
**Derby DE24 8BJ (GB)**

(56) References cited:
CN-A- 110 957 504    CN-A- 112 599 815
JP-U- S5 026 419      US-A1- 2008 311 443

• MARANDI SEPEHR ET AL: "Exergy and exergoeconomic comparison between multiple novel combined systems based on proton exchange membrane fuel cells integrated with organic Rankine cycles, and hydrogen boil-off gas subsystem", ENERGY CONVERSION AND MANAGEMENT, vol. 244, 1 September 2021 (2021-09-01), GB, pages 114532, XP093017976, ISSN: 0196-8904, DOI: 10.1016/j.enconman.2021.114532

EP 4 423 827 B1

**Description**

TECHNICAL FIELD

The invention relates to fuel cell systems.

BACKGROUND

Fuel cell systems which use hydrogen as a fuel are of interest for use in transport applications, including aviation, as they do not produce carbon dioxide at the point of use. Storage of hydrogen in liquid form, prior to its use in gaseous form, is of particular interest due to the greater volumetric energy density of liquid hydrogen (~8.5 MJ/l) compared to that of gaseous hydrogen (~2.7 MJ/l at 300 bar). It is known to vaporise liquid hydrogen by use of a pre-heating element to produce a flow of gaseous hydrogen (e.g. published patent applications CN112599815A, CN110597504A, JPS5026419U). In addition to vaporising liquid hydrogen, a fuel cell system using liquid hydrogen is also required to condition the temperature of the resulting gaseous hydrogen, prior to its input to a fuel cell stack of the fuel cell system. It is known to heat gaseous hydrogen, prior to input thereof to a fuel cell stack, by means of heat exchange with cooling fluid in a cooling loop associated with the stack, thereby utilising waste heat from the stack (e.g. published patent applications KR20130070161A, CN112599815A and CN110957504A). Some types of fuel cell stack have relatively low operating temperatures. For example a polymer electrolyte (proton exchange) membrane (PEM) stack typically has an operating temperature of less than around 90°C. If the cooling loop for such a stack implements a Rankine cycle, relatively low levels of power are recovered with low efficiency. Furthermore, a condenser within the cooling loop which is needed to implement a Rankine cycle can have significant size and mass, making the system unattractive for vehicle propulsion, especially aircraft propulsion. The use of cold gaseous hydrogen resulting from boil-off from a reservoir of liquid hydrogen to condense vaporised coolant fluid within a Rankine-type cooling circuit for a fuel cell stack is described by Marandi et al, in the paper "Exergy and exergoeconomic comparison between multiple novel combined systems based on proton exchange membrane fuel cells integrated with organic Rankine cycles, and hydrogen boil-off gas subsystem", Energy Conversion & Management 244 (2021), article 114532.

BRIEF SUMMARY

A first aspect of the invention provides a fuel cell system comprising a fuel pre-heater, a fuel cell stack and a cooling circuit arranged to cool the fuel cell stack, the fuel pre-heater being arranged to heat a flow of liquid hydrogen provided to an input thereof to provide a flow of gaseous hydrogen at an output thereof, the fuel cell system further comprising conveying means arranged to convey gaseous hydrogen from the output of the fuel pre-heater to a fuel input of the fuel cell stack and wherein the conveying means and the cooling circuit are arranged such that coolant fluid within the cooling circuit is in thermal contact with gaseous hydrogen within the conveying means during operation of the fuel cell system, characterised in that (a) the cooling circuit implements a Rankine cycle and includes a condenser arranged to condense gaseous coolant within the cooling circuit; (b) the condenser and the conveying means are arranged such that coolant fluid within the condenser is in thermal contact with gaseous hydrogen within the conveying means during operation of the fuel cell system; and (c) the pre-heater is arranged to heat coolant fluid within the cooling circuit. In operation of a fuel cell system of the invention, heat within coolant fluid within the condenser passes into gaseous hydrogen *en route* from the pre-heater to the fuel cell stack, thus assisting both in cooling the fuel cell stack and in heating the gaseous hydrogen to a temperature suitable for input to the fuel cell stack. The temperature of the gaseous hydrogen output by the pre-heater may be arranged such that the temperature of the gaseous hydrogen as it enters the fuel cell stack (after heat-exchange with coolant fluid in the condenser) is high enough to allow efficient reaction within the stack.

The size and weight of the condenser may be reduced compared to a case where a cooling circuit implementing a Rankine cycle comprises a condenser, and all heat from the condenser is lost to ambient air. The pre-heater is arranged to heat coolant fluid within the cooling circuit, thereby increasing the efficiency with which heat is converted to mechanical work by the Rankine cycle.

The pre-heater may be arranged to combust a portion of the flow of liquid hydrogen provided to the input of the pre-heater in order to generate heat to vaporise, or vaporise and heat, the remainder of the flow. Alternatively, the pre-heater may be arranged to combust at least a portion of hydrogen output from the fuel cell stack in order to generate heat to vaporise, or vaporise and heat, the flow of liquid hydrogen provided to the input of the pre-heater.

The fuel cell system may comprise a turbocharger, the turbocharger comprising a compressor arranged to be driven by a turbine in operation of the fuel cell system and to provide compressed air to an input of the fuel cell stack, the fuel cell system being arranged such that combustion products produced by the pre-heater are provided to the turbine.

A second aspect of the invention provides a propulsion system comprising a fuel cell system according to the first aspect of the invention and an electric propulsor arranged to receive electrical power from the fuel cell system and to provide propulsive thrust using the electrical power.

A third aspect of the invention provides an aircraft comprising a propulsion system according to the second aspect of the invention.

BRIEF DESCRIPTION OF THE DRAWINGS

Embodiments of the invention are described below by way of example only and with reference to the accompanying drawings in which:

| | |
|---|---|
| Figure 1 | shows a fuel cell system of the prior art; |
| Figures 2 & 5 | show fuel cell systems which are not examples of the invention but which are nevertheless useful for understanding the invention; |
| Figures 3, 6 & 7 | show first to third example fuel cell systems of the invention respectively; |
| Figure 4 | illustrates operation of a Rankine cycle performed by cooling apparatus comprised in the Figure 3 system; and |
| Figure 8 | shows an example propulsion system of the invention. |

DETAILED DESCRIPTION

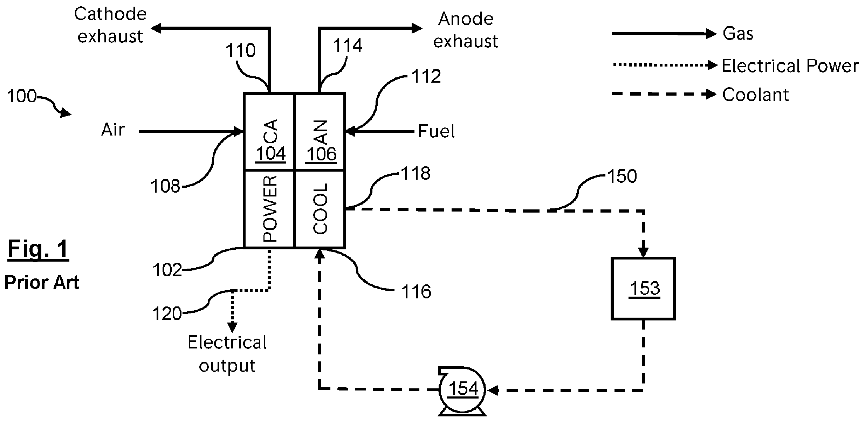

Figure 1 schematically shows a fuel cell system 100 of the prior art. The fuel cell system 100 comprises a polymer electrolyte (proton exchange) membrane (PEM) fuel cell stack 102 having cathode 104 and anode 106 sides and a cooling circuit 150 which includes the PEM fuel cell stack 102, a coolant/air heat exchanger 153 and a pump 154 arranged to pump coolant fluid around the cooling circuit 150. In operation of the fuel cell system 100 air and fuel are provided to inputs 108, 112 of the cathode 104 and anode 106 sides of the PEM fuel cell stack 102 respectively. Cathode exhaust comprising air and water vapour is output from a cathode output 110 of the PEM fuel cell stack 102; unreacted hydrogen is output from an anode output 114. DC electrical output power is generated at an electrical output 120. The PEM fuel cell stack 102 has a coolant input 116 and a coolant output 118. Waste heat from the PEM fuel cell stack 100 is removed by coolant fluid (for example water) within the coolant circuit 150 and passed to the coolant/air heat exchanger 153. Due to the relatively low operating temperature of the PEM fuel cell stack 102 (less than around 90°C) the heat exchanger 153 has significant weight and size, and may present substantial drag in aeronautical applications if mounted on the exterior of an aircraft comprising the system 100.

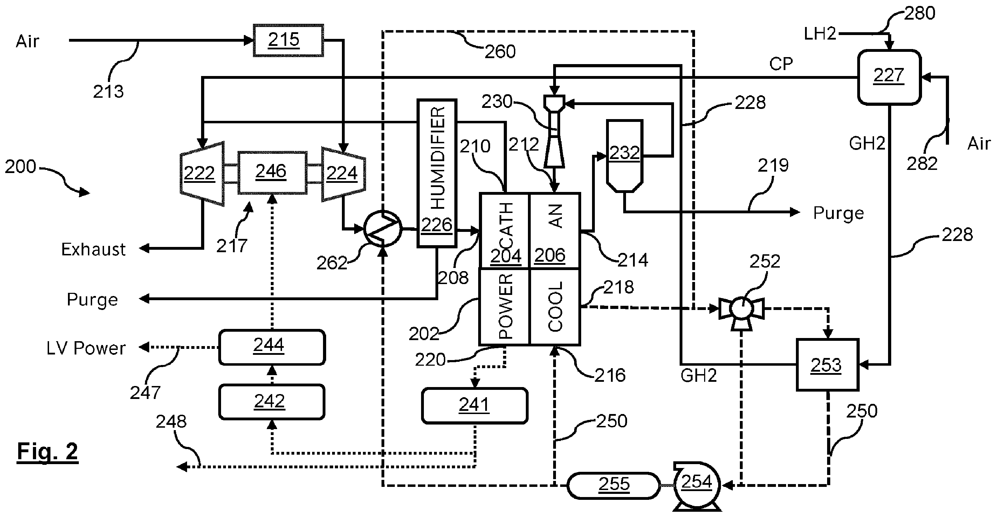

Referring to Figure 2, a fuel cell system 200 not according to the invention comprises a proton exchange (polymer electrolyte) membrane (PEM) fuel cell stack 202, a turbocharger 217 which includes a compressor 224 arranged to be driven by a turbine 222 and possibly also by an electric motor 246, a humidifier 226, a fuel pre-heater 227 (e.g. a catalytic burner) and a heat exchanger 262. The fuel cell system 200 further comprises a cooling circuit 250 including a pump 254 arranged to pump coolant fluid (in this case water) around the cooling circuit 250, a de-ioniser 255, a splitter 252 and a coolant/air heat exchanger 253. The PEM fuel cell stack 202 has cathode 204 and anode 206 sides, having inputs 208, 212 and outputs 210, 214 respectively. The PEM fuel cell stack 202 has a coolant input 216 and a coolant output 218. A cooling branch 260 is arranged in parallel with the PEM fuel cell stack 202 and includes the heat exchanger 262.

In operation of the fuel cell system 200. air enters an air intake 213 and passes through an air filter 215 to the compressor 224 of the turbocharger 217. Compressed air output from the compressor 224 passes through the heat exchanger 258, thereby cooling the compressed air, and the humidifier 226, and is provided to the input 208 of the cathode side 204 of the PEM fuel cell stack 202. Cathode exhaust comprising air and water vapour exits the cathode side 204 at output 210; water vapour in the cathode exhaust is recovered by the humidifier 226 and the remaining cathode exhaust is delivered the turbine 222 of the turbocharger 217. A flow of liquid hydrogen (LH2) fuel from a fuel store (not shown) is input to the system 200 at a fuel input 280 and passes to the fuel pre-heater 227. Air is input to the pre-heater 227 via an air input 282. A portion of the flow of liquid hydrogen is combusted in the pre-heater 227 producing heat which converts the remainder of the flow into gaseous hydrogen (GH2) which is provided to the input 212 of the anode side 206 of the PEM fuel cell stack 202 via an ejector 230. The gaseous hydrogen output from the pre-heater 227 is conveyed to the ejector 230 by conveying means 228 on a path via the coolant/air heat exchanger 253, such that the gaseous hydrogen within the conveying means 228 is in thermal contact with coolant fluid within the heat exchanger 253. Heat therefore passes from the coolant fluid within the heat exchanger 253 to the gaseous hydrogen within the conveying means 228 passing from the pre-heater 227 to the ejector 230. The heat exchanger 253 is smaller and lighter than the heat exchanger 153 of the fuel cell system 100 of Figure 1 since some cooling of the coolant fluid within the heat exchanger 253 is provided by the gaseous hydrogen from the pre-heater 227 during operation of the fuel cell system 200 (i.e. gaseous hydrogen within the conveying means 328). Combustion products (CP) from the pre-heater 227 are provided to the turbine 222 of the turbocharger 217. Hydrogen exits the anode side 206 of the PEM fuel stack 102 at the output 210 and is re-circulated to the input 212 by the ejector 230 via a water trap 232. The water trap 232 has an output 219 by which hydrogen within the anode 206 may be purged from the PEM fuel cell stack 202.

DC electrical power is provided at an electrical output 220 of the PEM fuel cell stack 202 and to a low voltage bus 244 via a DC/DC converter 241 and an inverter 242. The low voltage bus 244 provides power to the electric motor 246. Electrical power may be provided to an electric propulsor (not shown), for example, via an electrical output 248 of the DC/DC converter 241.

The pre-heater 227 is arranged such that the temperature of gaseous hydrogen entering the conveying means 228 is sufficient to achieve an adequate reaction rate within the fuel cell stack 202, even if minimal additional heat passes into the gaseous hydrogen from cooling fluid within the cooling circuit 250, as may be the case during start-up of the system 200, or when the electrical output power of the stack 202 is low.

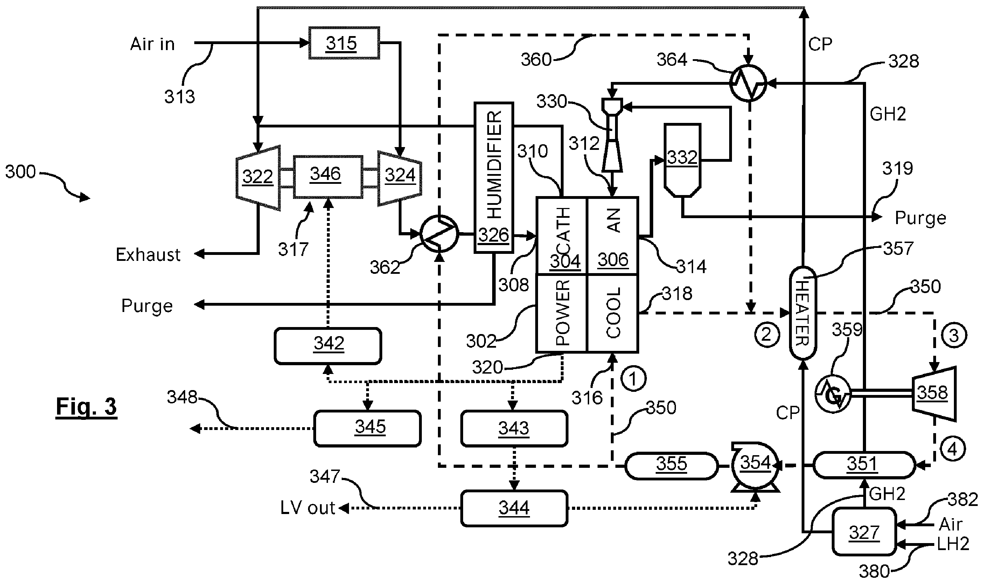

Figure 3 shows a first example fuel cell system 300 of the invention, the system 300 comprising a PEM fuel cell stack 302. The system 300 is similar to the fuel cell system 200 of Figure 2. Parts of the system 300 are labelled with reference signs differing by 100 from those labelling corresponding parts in Figure 2. The fuel cell system 300 comprises a cooling circuit 350 which includes the PEM fuel cell 302, a heater 357, a turbine 358 arranged to drive an electrical generator 359, a condenser 351, a de-ioniser 355 and a pump 354 arranged to pump coolant fluid (in this case water) around the cooling circuit 350. A cooling branch 360 is arranged in parallel with the PEM fuel cell stack 202 and includes heat exchangers 362, 364. Coolant water enters the PEM fuel cell stack 302 at a coolant input 316 in liquid form and is wholly or partially vaporised by waste heat from the PEM fuel cell stack 302 to produce steam, or steam and water, at coolant output 318 which is input to the heater 357 together with water from cooling branch 360. The heater 357 vaporises water input to it and provides steam to turbine 358. The steam drives the turbine 358 and is condensed in the condenser 351. The cooling circuit 350 thus converts waste heat from the PEM fuel cell stack 302 into useful work by means of a Rankine cycle.

In operation of the fuel cell system 300. flows of air and liquid hydrogen (LH2) fuel are input to a pre-heater 327 (e.g. a catalytic burner) at fuel and air inputs 380, 382 respectively. A portion of the flow of liquid hydrogen fuel is combusted by the pre-heater 327 to convert the remaining flow to gaseous hydrogen (GH2) which is conveyed by conveying means 328 to input 312 of anode 306 via heat exchanger 364 and ejector 330 on a path whereby the gaseous hydrogen within the conveying means 328 is in thermal contact with coolant fluid within condenser 351. The size and weight of the condenser 351 are reduced compared to those of the heat exchanger 153 of the fuel cell system 100 of Figure 1, such that the fuel cell system 300 is more suited to aeronautical applications for example. Combustion products (CP) from the pre-heater 351 are passed to heater 357 within the cooling circuit 350 to provide heating of steam, or steam and water, within the cooling circuit 350 between the PEM fuel cell stack 302 and the turbine 358, allowing additional work to be extracted by the turbine 358, and with greater thermodynamic efficiency, than is possible in the absence of the heater 357. The combustion products are subsequently exhausted from the fuel cell system 300 via turbine 322 of turbocharger 317.

The fuel cell system 300 further comprises low- and high-voltage DC/DC converters 343, 345 respectively and a low voltage bus 344.

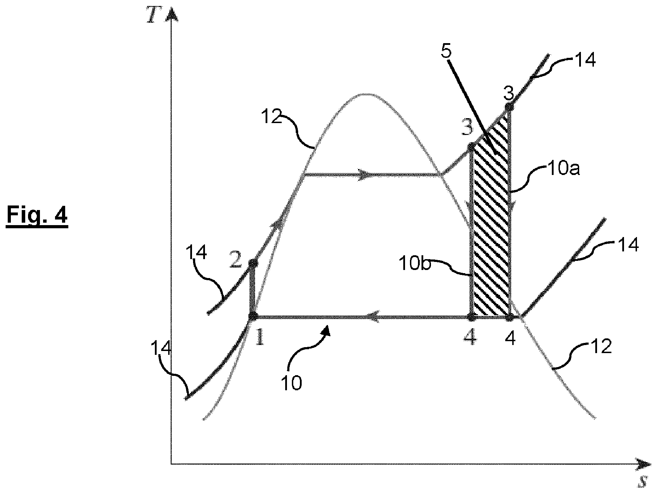

Figure 4 shows a plot 10 of temperature T versus entropy S for coolant water within the cooling circuit 350 of the fuel cell system 300 of Figure 3. The cooling circuit 350 executes a Rankine cycle to convert waste heat from the PEM fuel cell stack 302 into useful work extracted by the turbine 358. Positions in the cooling circuit 350 at the coolant fluid input 316 and immediately before the heater 357 are labelled 1 and 2 respectively in Figures 3 and 4; positions immediately before and after the turbine 158 are labelled 3 and 4 respectively. The work extracted by the turbine 358 is represented by the area enclosed by the plot 10, which has a portion 10a representing the change in temperature T and entropy S of the coolant fluid (steam) across the turbine 358. In the absence of the heater 357, the plot 10 has a portion 10b representing the change in temperature T and entropy S of the coolant fluid (steam) across the turbine 358. The area 5 in Figure 4 therefore represents an additional amount of work extracted by the turbine 358 due to the presence of the heater 357 within the cooling loop 350 in one cycle of the loop 350. The liquid/gas phase separation line for the coolant fluid is indicated by 12 in Figure 4. Lines of constant pressure are indicated by 14.

The thermodynamic efficiency $\eta_{th}$ with which net work $w_{net}$ is extracted by the Rankine cycle is

$$\eta_{th} = \frac{w_{net}}{Q_{in}} = \frac{Q_{in} - Q_{out}}{Q_{in}} = 1 - \frac{Q_{out}}{Q_{in}}$$

where $Q_{in}$ is the heat input to the coolant fluid by the PEM fuel cell stack 102 plus the heat input to the coolant fluid by the heater 357, and $Q_{out}$ is the heat output from the condenser 351. The net work $w_{net}$ is the difference between the work extracted by the turbine 358 and the work carried out by the pump 354. If $h_i$ is the enthalpy at position i, where i=1, 2, 3 or 4, the thermodynamic efficiency $\eta_{th}$ is given by

$$\eta_{th} = \frac{w_{net}}{Q_{in}} = \frac{(h_3 - h_4) - (h_2 - h_1)}{(h_3 - h_2)} = 1 - \frac{h_4 - h_1}{h_3 - h_2}$$

The thermodynamic efficiency with which work is extracted by the turbine 358 is therefore also increased by the presence of the heater 357 (in addition to an increase in the absolute amount of work extracted) since the enthalpy $h_3$ of the coolant fluid at position 3 (immediately before the turbine 358) is greater than $h_3$ in the absence of the heater 357, so that the value $h_3$ - $h_2$ is increased by the heater 357.

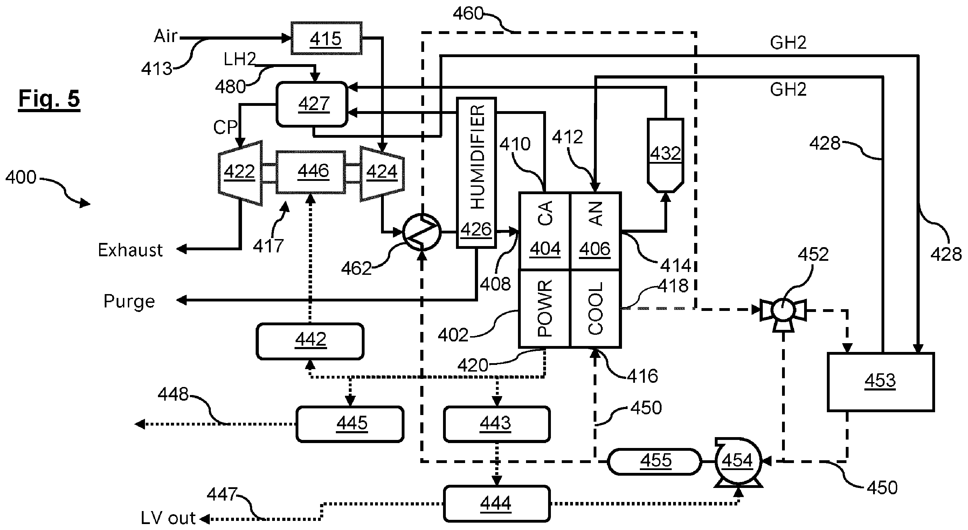

Figure 5 shows a fuel cell system 400 not according to the invention. The system 400 is similar to the fuel cell system 200 of Figure 2. Parts of the system 400 are labelled with reference signs differing by 200 from those labelling corresponding parts in Figure 2. The fuel cell system 400 comprises a cooling circuit 450 including a coolant/air heat exchanger 453. In operation of the fuel cell system 400, a flow of liquid hydrogen (LH2) fuel is input to a pre-heater or burner 427 (e.g. a catalytic burner) which combusts gaseous hydrogen output from anode side 406 of PEM fuel cell stack 402 using air output from cathode side 404 of the PEM fuel cell stack 402. Heat generated by the burner 427 converts the flow of liquid hydrogen into a flow of gaseous hydrogen which is provided to input 412 of anode 406 by conveying means 428 via a path in which the gaseous hydrogen therein is in thermal contact with coolant fluid within the coolant/air heat exchanger 453 comprised in cooling circuit 450. (In addition to vaporising the liquid hydrogen input to the burner may significantly heat the resulting gaseous hydrogen). The gaseous hydrogen provides cooling of coolant fluid within the heat exchanger 453 which may therefore be smaller and lighter compared to the heat exchanger 153 of the fuel cell system 100 of Figure 1. Combustion products (CP) output from burner 426 are provided to turbine 422 of turbocharger 417. Hydrogen is continuously purged from anode side 406 allowing steady operation of the PEM fuel cell stack 402. The fuel cell system 400 further comprises low- and high-voltage DC/DC converters 443, 445 respectively and a low voltage bus 444.

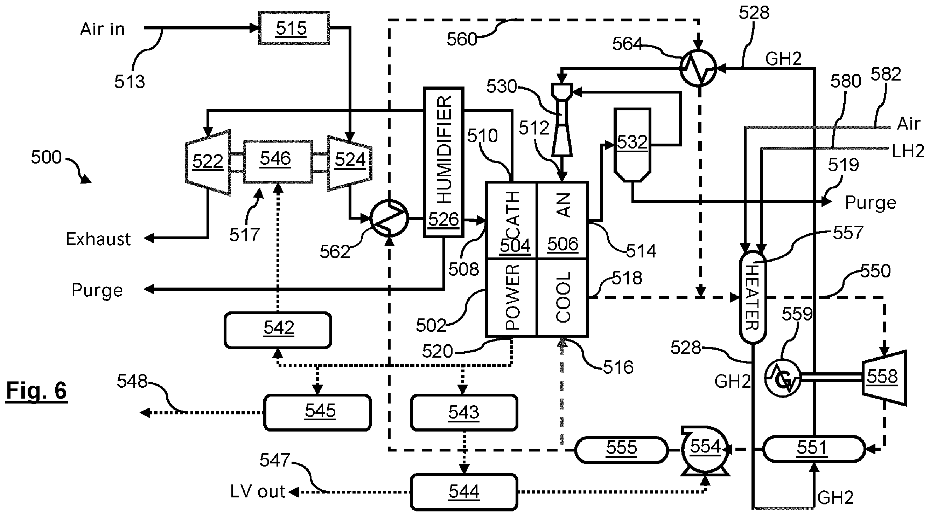

Figure 6 shows a second example fuel cell system 500 of the invention. The system 500 is similar to the fuel cell system 300 of Figure 3. Parts of the system 500 are labelled with reference signs differing by 200 from those labelling the corresponding parts in Figure 3. In operation of the fuel cell system 500, a flow of liquid hydrogen (LH2) fuel is input to heater 557 in which a portion of the flow is combusted to heat steam and/or liquid water within cooling circuit 550, thereby increasing the amount of useful work extracted by turbine 558, and the thermodynamic efficiency of extraction, compared to the case where heater 557 is not present. The remainder of the flow of liquid hydrogen input to the heater 557 is simultaneously heated to produce a flow of gaseous hydrogen which is input to anode side 506 of PEM fuel cell stack 502 by conveying means 528 via condenser 551 and ejector 512 on a path in which the gaseous hydrogen from the heater 557 within conveying means 528 is in thermal contact with coolant within condenser 551. This allows the size and weight of the condenser 551 to be reduced compared to a condenser in a Rankine arrangement of the prior art because coolant fluid within the condenser 551 is cooled by the flow of gaseous hydrogen output from heater 557. Combustion products from the heater 557 are provided to turbine 522 of turbocharger 517. The fuel cell system 500 further comprises low- and high-voltage DC/DC converters 543, 545 respectively and a low voltage bus 544. The heater 557 serves both as a pre-heater for vaporising liquid hydrogen input at system fuel input 580 (and possibly also heating the resulting gaseous hydrogen) and as a means for heating coolant fluid within cooling circuit 550. Depending on the operational state of fuel cell stack 502, coolant fluid exiting the stack 502 at coolant output 518 thereof may in liquid form or in gaseous form (i.e. steam) or a combination of both liquid water and steam.

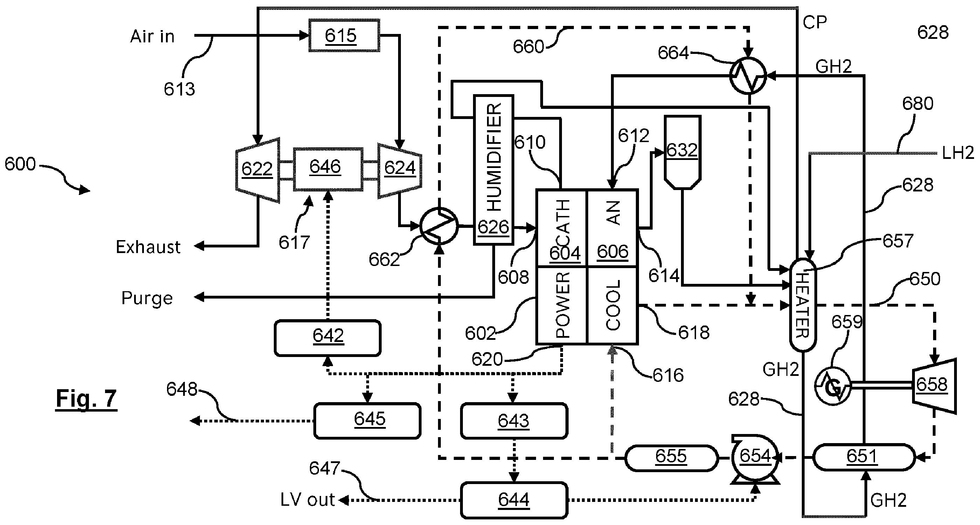

Figure 7 shows a third example fuel cell system 600 of the invention which is similar to the fuel cell system 500 of Figure 6. Parts of the fuel cell system 600 are labelled with reference signs differing by 100 from those labelling the corresponding parts in Figure 6. In operation of the fuel cell system 600, exhaust from cathode side 604 of PEM fuel cell stack 602 is output at stack output 610 and passes to humidifier 626, which removes water vapour, and is then input to heater 657. Gaseous hydrogen fuel is provided to stack input 612. Unreacted gaseous hydrogen fuel is output at stack output 614 and is input to the heater 657 via water trap 632. Air and gaseous hydrogen fuel output from the PEM fuel cell stack 602 are combusted in the heater 657 (which may be a catalytic burner), heating coolant fluid in cooling circuit 650 and also converting liquid hydrogen (LH2) from fuel input 680 into gaseous hydrogen which passes to stack input 612 at anode side 606 of the PEM fuel cell stack 602 via conveying means 628 such that the gaseous hydrogen therein is in thermal contact with coolant fluid in condenser 651. In addition to vaporising liquid hydrogen input at fuel input 680, the resulting gaseous hydrogen may also be heated. The gaseous hydrogen cools coolant fluid in the condenser 651 allowing its size and weight to be smaller than those of condensers in systems of the prior art, and smaller than the coolant/air heat-exchanger 153 in the fuel cell system 100 of Figure 1. The gaseous hydrogen within the conveying means 628 is heated by heat from the condenser 651 prior to its input to the PEM fuel cell stack 602. Combustion products (CP) are provided to turbine 622 of turbocharger 617.

The coolant fluid within the cooling circuit 650 is water. The cooling circuit 650 is arranged such that the water is in the form of steam between heater 657 and condenser 651 and in liquid form between the condenser 651 and coolant input 616 of PEM fuel cell stack 602. Liquid water entering the PEM fuel cell stack 602 at coolant input 616 is heated by waste heat from the stack 602 and wholly or partially converted to steam. Any remaining liquid water output at coolant output 618, together with water from cooling branch 660, is converted to steam by heater 657. Steam out from the heater 657 is delivered to turbine 658 comprised in cooling circuit 650.

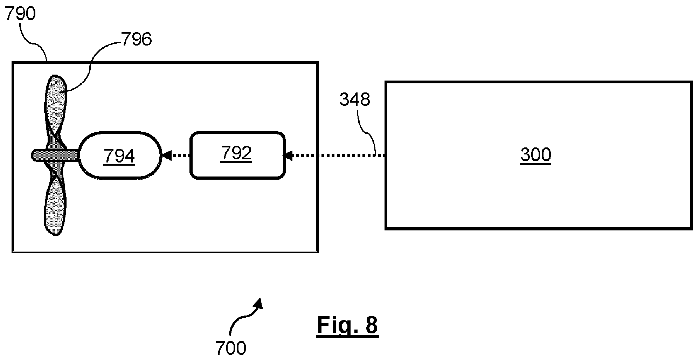

Figure 8 shows an example propulsion system 700 of the invention comprising the fuel cell system 300 of Figure 3 and an electric propulsor 790. The electric propulsor 790 comprises an inverter 792 and an electric motor 794 arranged to drive a propeller or fan 796. In operation of the propulsion system 700, electrical power generated at the electrical output 348 of the fuel cell system 300 is provided to the inverter 792 of the electric propulsor 790. In other example propulsion systems of the invention, the fuel cell system 300 is substituted by one of the fuel cell systems 500, 600 of Figures 6 and 7. The propulsion system 700 may be comprised in an aircraft.

Any of the pre-heaters 227, 327, 427, 557, 657 of the fuel cell systems 200, 300, 400, 500, 600 respectively may allow the rate at which hydrogen is combusted therein to be adjusted, thus allowing the temperature of gaseous hydrogen leaving the pre-heater to be adjusted.

**Claims**

1. A fuel cell system (300; 500; 600) comprising a fuel pre-heater (357; 557; 657), a fuel cell stack (302; 502; 602) and a cooling circuit (350; 550; 650) arranged to cool the fuel cell stack, the fuel pre-heater being arranged to heat a flow of liquid hydrogen provided to an input thereof to provide a flow of gaseous hydrogen at an output thereof, the fuel cell system further comprising conveying means (328; 528; 628) arranged to convey gaseous hydrogen from the output of the fuel pre-heater to a fuel input (312; 512; 612) of the fuel cell stack and wherein the conveying means and the cooling circuit are arranged such that coolant fluid within the cooling circuit is in thermal contact with gaseous hydrogen within the conveying means during operation of the fuel cell system, **characterised in that**

   (a) the cooling circuit implements a Rankine cycle and includes a condenser (351; 551; 651) arranged to condense gaseous coolant within the cooling circuit;
   (b) the condenser and the conveying means (328; 528; 628) are arranged such that coolant fluid within the condenser is in thermal contact with gaseous hydrogen within the conveying means during operation of the fuel cell system; and
   (c) the pre-heater (327; 557; 657) is arranged to heat coolant fluid within the cooling circuit.

2. A fuel cell system (300; 500) according to claim 1 wherein the pre-heater (327; 557) is arranged to combust a portion of the flow of liquid hydrogen provided to the input thereof in order to generate heat to vaporise, or vaporise and heat, the remainder of the flow.

3. A fuel cell system (600) according to claim 1 wherein the pre-heater (657) is arranged to combust at least a portion of hydrogen output from the fuel cell stack (602) in order to generate heat to vaporise, or vaporise and heat, the flow of liquid hydrogen provided to the input of the pre-heater.

4. A fuel cell system (300; 500; 600) according to claim 2 or claim 3 and further comprising a turbocharger (317; 517; 617), the turbocharger comprising a compressor (324; 524; 624) arranged to be driven by a turbine (322; 522; 622) in operation of the fuel cell system, and wherein the compressor is arranged to provide compressed air to an input (308; 508; 608) of the fuel cell stack (302; 502; 602) and the fuel cell system is arranged such that combustion products produced by the pre-heater are provided to the turbine.

5. A propulsion system (700) comprising a fuel cell system according to any preceding claim (300) and an electric propulsor (790) arranged to receive electrical power from the fuel cell system and to provide propulsive thrust using the electrical power.

6. An aircraft comprising a propulsion system according to claim 5.

**Patentansprüche**

1. Brennstoffzellensystem (300; 500; 600), umfassend einen Brennstoffvorwärmer (357; 557; 657), einen Brennstoffzellenstapel (302; 502; 602) und einen Kühlkreislauf (350; 550; 650), der dazu angeordnet ist, den Brennstoffzellenstapel zu kühlen, wobei der Brennstoffvorwärmer dazu angeordnet ist, einen Strom von flüssigem Wasserstoff zu erwärmen, der einem Eingang davon bereitgestellt wird, um einen Strom von gasförmigem Wasserstoff an einem Ausgang davon bereitzustellen, wobei das Brennstoffzellensystem ferner Fördermittel (328; 528; 628) umfasst, die dazu angeordnet sind, gasförmigen Wasserstoff von dem Ausgang des Brennstoffvorwärmers zu einem Brennstoffeingang (312; 512; 612) des Brennstoffzellenstapels zu fördern, und wobei die Fördermittel und der Kühlkreislauf so angeordnet sind, dass Kühlfluid innerhalb des Kühlkreislaufs in thermischem Kontakt mit gasförmigem Wasserstoff innerhalb des Fördermittels während des Betriebs des Brennstoffzellensystems ist, **dadurch gekennzeichnet, dass**

(a) der Kühlkreislauf einen Rankine-Zyklus implementiert und einen Kondensator (351; 551; 651) beinhaltet, der dazu angeordnet ist, gasförmiges Kühlmittel innerhalb des Kühlkreislaufs zu kondensieren;
(b) der Kondensator und die Fördermittel (328; 528; 628) so angeordnet sind, dass Kühlfluid innerhalb des Kondensators in thermischem Kontakt mit gasförmigem Wasserstoff innerhalb der Fördermittel während des Betriebs des Brennstoffzellensystems ist; und
(c) der Vorwärmer (327; 557; 657) dazu angeordnet ist, Kühlfluid innerhalb des Kühlkreislaufs zu erwärmen.

2. Brennstoffzellensystem (300; 500) nach Anspruch 1, wobei der Vorwärmer (327; 557) dazu angeordnet ist, einen Teil des Stroms von flüssigem Wasserstoff, der dem Eingang davon bereitgestellt wird, zu verbrennen, um Wärme zu erzeugen, um den Rest des Stroms zu verdampfen oder zu verdampfen und zu erwärmen.

3. Brennstoffzellensystem (600) nach Anspruch 1, wobei der Vorwärmer (657) dazu angeordnet ist, zumindest einen Teil von Wasserstoffausgabe aus dem Brennstoffzellenstapel (602) zu verbrennen, um Wärme zu erzeugen, um den Strom von flüssigem Wasserstoff, der dem Eingang des Vorwärmers bereitgestellt wird, zu verdampfen oder zu verdampfen und zu erwärmen.

4. Brennstoffzellensystem (300; 500; 600) nach Anspruch 2 oder Anspruch 3, und ferner umfassend einen Turbolader (317; 517; 617), wobei der Turbolader einen Verdichter (324; 524; 624) umfasst, der dazu angeordnet ist, von einer Turbine (322; 522; 622) im Betrieb des Brennstoffzellensystems angetrieben zu werden, und wobei der Verdichter dazu angeordnet ist, Druckluft einem Eingang (308; 508; 608) des Brennstoffzellenstapels (302; 502; 602) bereitzustellen, und das Brennstoffzellensystem so angeordnet ist, dass Verbrennungsprodukte, die von dem Vorwärmer erzeugt werden, der Turbine bereitgestellt werden.

5. Antriebssystem (700), umfassend ein Brennstoffzellensystem nach einem vorhergehenden Anspruch (300) und einen elektrischen Antrieb (790), der dazu angeordnet ist, elektrische Leistung von dem Brennstoffzellensystem zu empfangen und Antriebsschub unter Verwendung der elektrischen Leistung bereitzustellen.

6. Luftfahrzeug, umfassend ein Antriebssystem nach Anspruch 5.

**Revendications**

1. Système de pile à combustible (300 ; 500 ; 600) comprenant un préchauffeur de combustible (357 ; 557 ; 657), un empilement de piles à combustible (302 ; 502 ; 602) et un circuit de refroidissement (350 ; 550 ; 650) agencé pour refroidir l'empilement de piles à combustible, le préchauffeur de combustible étant agencé pour chauffer un flux d'hydrogène liquide fourni à une entrée de celui-ci pour fournir un flux d'hydrogène gazeux à une sortie de celui-ci, le système de pile à combustible comprenant en outre des moyens de convoyage (328 ; 528 ; 628) agencés pour convoyer l'hydrogène gazeux de la sortie du préchauffeur de combustible à une entrée de combustible (312 ; 512 ; 612) de l'empilement de piles à combustible et dans lequel les moyens de convoyage et le circuit de refroidissement sont agencés de telle sorte que le fluide de refroidissement à l'intérieur du circuit de refroidissement soit en contact thermique avec l'hydrogène gazeux à l'intérieur des moyens de convoyage pendant le fonctionnement du système de pile à combustible, **caractérisé en ce que**

(a) le circuit de refroidissement met en œuvre un cycle de Rankine et comprend un condenseur (351 ; 551 ; 651) agencé pour condenser le liquide de refroidissement gazeux à l'intérieur du circuit de refroidissement ;
(b) le condenseur et les moyens de convoyage (328 ; 528 ; 628) sont agencés de telle sorte que le fluide de refroidissement à l'intérieur du condenseur soit en contact thermique avec de l'hydrogène gazeux à l'intérieur des moyens de convoyage pendant le fonctionnement du système de pile à combustible ; et
(c) le préchauffeur (327 ; 557 ; 657) est agencé pour chauffer le fluide de refroidissement à l'intérieur du circuit de refroidissement.

2. Système de pile à combustible (300 ; 500) selon la revendication 1, dans lequel le préchauffeur (327 ; 557) est agencé pour brûler une partie du flux d'hydrogène liquide fourni à son entrée afin de générer de la chaleur pour vaporiser, ou vaporiser et chauffer, le reste du flux.

3. Système de pile à combustible (600) selon la revendication 1, dans lequel le préchauffeur (657) est agencé pour brûler au moins une partie de la sortie d'hydrogène provenant de l'empilement de piles à combustible (602) afin de générer de la chaleur pour vaporiser, ou vaporiser et chauffer, le flux d'hydrogène liquide fourni à l'entrée du préchauffeur.

4. Système de pile à combustible (300 ; 500 ; 600) selon la revendication 2 ou la revendication 3 et comprenant en outre un turbocompresseur (317 ; 517 ; 617), le turbocompresseur comprenant un compresseur (324 ; 524 ; 624) agencé pour être entraîné par une turbine (322 ; 522 ; 622) en cours de fonctionnement du système de pile à combustible, et dans lequel le compresseur est agencé pour fournir de l'air comprimé à une entrée (308 ; 508 ; 608) de l'empilement de piles à combustible (302 ; 502 ; 602) et le système de pile à combustible est agencé de sorte que les produits de combustion produits par le préchauffeur soient fournis à la turbine.

5. Système de propulsion (700) comprenant un système de pile à combustible selon une quelconque revendication précédente (300) et un propulseur électrique (790) agencé pour recevoir une puissance électrique du système de pile à combustible et pour fournir une poussée propulsive en utilisant la puissance électrique.

6. Aéronef comprenant un système de propulsion selon la revendication 5.

Fig. 1
Prior Art

**Fig. 2**

EP 4 423 827 B1

**Fig. 3**

EP 4 423 827 B1

**Fig. 4**

Fig. 5

**Fig. 6**

**Fig. 7**

EP 4 423 827 B1

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 112599815 A
- CN 110597504 A
- JP S5026419 U
- KR 20130070161 A
- CN 110957504 A

### Non-patent literature cited in the description

- **MARANDI et al.** Exergy and exergoeconomic comparison between multiple novel combined systems based on proton exchange membrane fuel cells integrated with organic Rankine cycles, and hydrogen boil-off gas subsystem. *Energy Conversion & Management*, 2021, vol. 244 (114532)